# EUROPEAN PATENT APPLICATION

(11) **EP 3 333 458 A1**
(43) Date of publication of application: **13.06.2018**
(21) Application number: 16832749.2
(22) Date of filing: 19.07.2016
(51) Int. Cl.: F16H 55/48, B29C 59/02, F16C 19/06, F16C 33/58, F16C 35/067, F16H 55/36, B29L 31/32

(54) **RESIN PULLEY**

(30) Priority: 04.08.2015 JP 2015154104
(71) Applicant: NTN Corporation, Osaka-shi, Osaka 550-0003 (JP)
(72) Inventor: NAKAO, Goro, Iwata-shi Shizuoka 438-8510 (JP)
(74) Representative: Grünecker Patent- und Rechtsanwälte PartG mbB
(86) International application number: PCT/JP2016/071124
(87) International publication number: WO 2017/022470

(57) **Abstract**

A resin pulley includes a rolling bearing (10) having an outer race (11), and a pulley body (30) resin-molded on the outer race (11). The outer race (11) has, on the radially outer surface, a pair of annular grooves (19), and an annular protrusion (20) between the pair of annular grooves (19). The annular protrusion (20) has groove-shaped recesses (21) and projections (22) disposed circumferentially alternating with the recesses (21), the recesses (21) and the projections (22) being formed by straight knurling by rolling on the radially outer surface of the annular protrusion (20) such that both ends thereof extend to the pair of annular grooves (19). The diameter of the circle that contacts, from radially inwardly, bottoms of the recesses (21) is larger than the diameter of the circular bottom of each annular groove (19). The pulley body (30) includes protrusions (36) formed by filling a molten resin in the recesses (21) and solidifying the molten resin, when forming the pulley body (30) on the radially outer surface of the outer race (11) by resin molding. This prevents creep.

## Description

### TECHNICAL FIELD

This invention relates to a resin pulley that guides movements of a timing belt or an engine accessory drive belt of a vehicle engine.

### BACKGROUND ART

As an idler pulley that guides movements of a timing belt or an engine accessory drive belt or a tension pulley for adjusting the tension of the belt, to reduce the weights and costs, a resin pulley is widely used which includes a rolling bearing, and a pulley body molded on the radially outer surface of the outer race of the rolling bearing using a synthetic resin.

Since the pulley body of such a resin pulley is made from a material different in linear expansion coefficient from the material of the outer race of the rolling bearing, when the temperature rises, the outer race and the pulley body are expanded to a different degree. This lowers the force with which the pulley body retains the outer race, and could result in relative slippage (creep) between the outer race and the pulley body.

To reduce emissions of carbon dioxide, an increasing number of today's vehicle engines are configured to be stopped when the vehicle stops, and provided with an integrated starter generator (ISG) capable of starting the engine as soon as the driver depresses the accelerator pedal to start the vehicle.

In an automobile including the above described ISG, the idler pulley and the tension pulley are accelerated and decelerated extremely frequently, and thus a simple slip stop arrangement including an eccentric groove or a helical groove formed in the radially outer surface of the outer race cannot prevent creep between the outer race and the pulley body.

A resin pulley is proposed in which straight knurling is provided by rolling on the radially outer surface of the outer race, molten resin for molding the pulley body is filled in groove-shaped recesses of the straight knurling, and is cooled and solidified to form protrusions, and through engagement between the protrusions and the recesses of the straight knurl, creep between the outer race and the pulley body is prevented (see Patent Documents 1 and 2 below).

### PRIOR ART DOCUMENTS

### PATENT DOCUMENTS

Patent Document 1: WO 2013/002284
Patent Document 2: JP. 11-148550 A

### SUMMARY OF THE INVENTION

### OBJECT OF THE INVENTION

When one wishes to prevent creep between the outer race and the pulley body through straight knurling, if the depths of the groove-shaped recesses of the straight knurling are small, it is difficult to effectively prevent creep, and thus, relatively deep groove-shaped recesses are necessary.

In the resin pulley described in Patent Documents 1 and 2, an engaging groove is formed in the radially outer surface of the outer race, and straight knurling is applied to the bottom of the engaging groove to form groove-shaped recesses and projections disposed circumferentially alternating with the groove-shaped recesses. Accordingly, if the depths of the groove-shaped recesses are large, the load applied to the outer race is large and the outer race deforms. The deformation of the outer race may cause noise during rotation of the rolling bearing, and also result in a decrease in a rotation accuracy due to whirling, and thus, functions of the bearing are lowered. Accordingly, it is not possible to form a groove recesses having a depth large enough to prevent the creep.

An object of the present invention is to provide a resin pulley that can reliably prevent creep while reducing deformation of the outer race of the rolling bearing.

### MEANS FOR ACHIEVING THE OBJECT

To achieve the above object, the present invention provides a resin pulley comprising: a rolling bearing including an outer race; and a pulley body that is integrally resin-molded on a radially outer surface of the outer race of the rolling bearing; wherein the outer race has, on the radially outer surface of the outer race, a pair of annular grooves axially spaced apart from each other and each having a circular bottom, and an annular protrusion between the pair of annular grooves; the annular protrusion has, on a radially outer surface of the annular protrusion, straight knurling formed by rolling, the straight knurling comprising groove-shaped recesses and projections disposed circumferentially alternating with the groove-shaped recesses, each of the groove-shaped recesses and the projections having two ends that extend to the respective pair of annular grooves; the diameter of a circle that contacts, from radially inwardly, bottoms of the groove-shaped recesses is larger than the diameter of the circular bottom of each of the pair of annular grooves; and the pulley body includes protrusions formed by solidification of a molten resin filling the groove-shaped recesses.

As described above, knurling by rolling is applied to the radially outer surface of the annular protrusion formed axially between the pair of annular grooves, and thus, a load applied to the annular protrusion when the annular protrusion plastically deforms is partially axially applied to and absorbed by the pair of annular grooves.

Since the diameter of the circle that contacts, from radially inwardly, the bottoms of the groove-shaped recesses formed by the knurling is larger than the diameter of the circular bottom of each annular groove, the load applied to the annular protrusion when the annular protrusion plastically deforms is effectively absorbed by the pair of annular grooves, so that a radial load is very small, and the straight knurling can be applied without deforming the outer race. Further, deep groove-shaped recesses can be formed, and through the engagement between the protrusions formed in the groove-shaped recesses and the projections, creep between the outer race and the pulley body can be reliably prevented.

The axial sectional shape of the annular protrusion may be a circular arc or a trapezoid. Alternatively, the axial sectional shape of the annular protrusion may be a combination of a trapezoid and a circular arc. By having such sectional shapes, the axial width of the annular protrusion is smallest at the radially outer surface and gradually and radially inwardly increases, so that when teeth a knurling tool are pushed into the annular protrusion, the contact area between the teeth of the knurling tool and the annular protrusion gradually increases, thus preventing a sudden increase in load applied to the annular protrusion. This makes it easier to provide straight knurling by rolling on the annular protrusion.

Since the outer race of the rolling bearing is made from a material different in linear expansion coefficient from the material of the pulley body, when the temperature rises, the outer race and the pulley body are expanded to a different degree. If the height of the protrusions that circumferentially engage the projections of the straight knurling is less than 0.3 mm, the circumferential engaging force therebetween may become so weak that creep may occur between the outer race and the pulley body when the outer race and the pulley body are expanded to a different degree, Thus, the depths of the groove-shaped recesses in which the protrusions are formed is preferably 0.3mm or over.

### ADVANTAGES OF THE INVENTION

As described above, in the present invention, the pair of annular grooves provided at axial both sides of the annular protrusion to which knurling is applied can effectively absorb the load applied to the annular protrusion when the annular protrusion plastically deforms. Accordingly, a radial load applied to the outer race is very small, so that deep groove-shaped recesses can be formed, and through engagement between the protrusions formed in the groove-shaped recesses and the projections, creep between the outer race and the pulley body can be reliably prevented.

### BRIEF DESCRIPTION OF THE DRAWINGS

Fig. 1 is a vertical sectional view of a resin pulley according to an embodiment of the present invention.
Fig. 2 is an enlarged sectional view of a portion of the resin pulley of Fig. 1 where an outer race of a rolling bearing and a pulley body are prevented from rotating relative to each other.
Fig. 3 is a sectional view taken along a line III-III of Fig. 2.
Fig. 4 is a perspective view of a portion of the outer race.
Fig. 5 is a sectional view of another example of an annular protrusion.
Fig. 6 is a sectional view of still another example of an annular protrusion.
Fig. 7 is a sectional view of yet another example of a annular protrusion.

### EMBODIMENT OF THE INVENTION

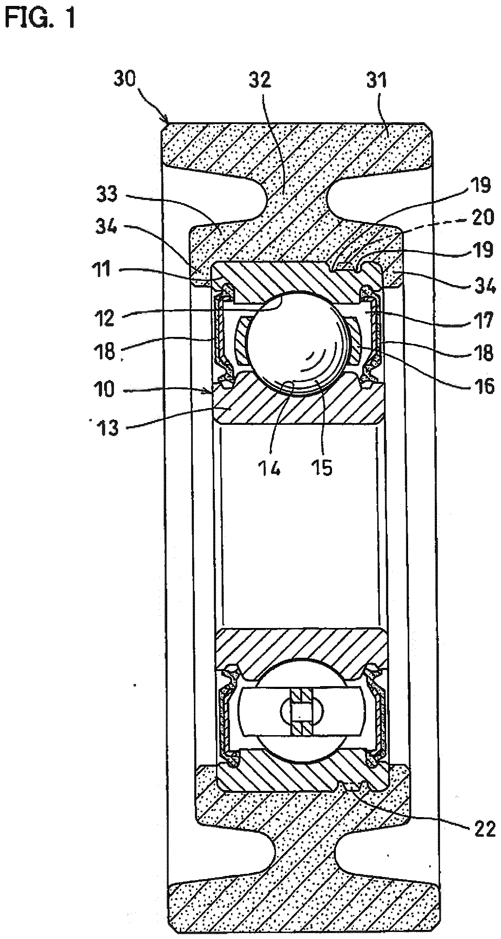

A resin pulley embodying the present invention is now described with reference to the drawings. As illustrated in Fig. 1, the resin pulley comprises a rolling bearing 10 and a pulley body 30 disposed around the outer periphery of the rolling bearing 10.

The rolling bearing 10 is a deep groove ball bearing including an outer race 11 having a raceway groove 12 in the radially inner surface thereof, an inner race 13 having a raceway groove 14 in the radially outer surface thereof, and balls 15 disposed between the raceway groove 12 of the outer race 11 and the raceway groove 14 of the inner race 13, the balls 15 being retained by a retainer 16. The rolling bearing 10 further includes seal members 18 each closing the respective open ends of the bearing space 17 defined between the outer race 11 and the inner race 13.

The rolling bearing 10 is not limited to a sealed deep groove ball bearing. For example, the rolling bearing 10 may be a cylindrical roller bearing.

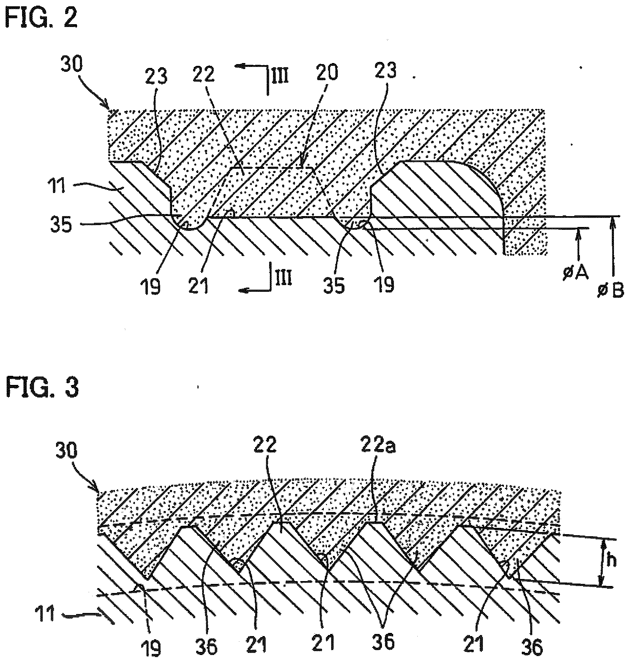

As illustrated in Fig. 2 to Fig. 4, the outer race 11 has, in the radially outer surface, a pair of annular grooves 19 axially spaced apart from each other, and an annular protrusion 20 between the pair of annular grooves 19. The annular protrusion 20 has a trapezoidal section taken along a plane including the center axis of the rolling bearing 10 (i.e., an axial plane). The radially outer surface of the annular protrusion is knurled by rolling such that the annular protrusion 10 has groove-shaped recesses 21 each having two ends extending to the respective annular grooves 19, and projections 22 circumferentially alternating with the recesses 21, and each having two ends extending to the respective annular grooves 19.

The knurling is straight knurling such that each recess 21 has a V-shaped section taken along a plane perpendicular to the center axis of the rolling bearing 10, and a depth h (see Fig. 3) of 0.3mm or over, while each projection 22 has a slightly truncated V-shaped section taken along a plane perpendicular to the center axis of the rolling bearing 10 which is substantially V-shaped with its apex slightly truncated.

As illustrated in Fig. 2, the annular grooves 19 and the groove-shaped recesses 21 are shaped and arranged such that the diameter B of the circle that is in contact, from radially inwardly, with the bottoms of the groove-shaped recesses 21 is larger than the diameter A of the (circular) bottom of each annular groove 19.

As illustrated in Fig. 2, the outer ring 11 has chamfers 23 at the intersections between the outer side surfaces of the respective pair of annular grooves 19 and the radially outer surface of the outer race 11.

As illustrated in Fig. 1, the pulley body 30 is molded using a synthetic resin. The pulley body 30 includes a belt guide ring 31, an annular plate portion 32 provided on the inner periphery of the belt guide ring 31, and a boss 33 provided at the inner periphery of the annular plate portion 32. The boss 33 has inwardly extending flanges 34 at both ends thereof. While not illustrated, a plurality of radial ribs may be provided that connect the belt guide ring 31 to the boss 33.

The pulley body 30 is molded on the radially outer surface of the outer race 11 by injection molding. During molding, as illustrated in Fig. 2 and Fig. 3, molten resin flows into the pair of annular grooves 19 formed on the radially outer surface of the outer race 11 and the recesses 21 formed in the radially outer surface of the annular protrusion 20, and solidifies therein by being cooled or heated, thus forming annular ribs 35 in the respective pair of annular grooves 19, and protrusions 36 in the respective recesses 21.

The annular ribs 35 axially engage the outer side surfaces of the respective annular grooves 19, thus preventing relative axial movement between the outer race 11 and the pulley body 30. The protrusions 36 circumferentially engage the projections 22 to prevent creep between the outer race 11 and the pulley body 30.

In the embodiment, since the pair of annular grooves 19 are formed in the radially outer surface of the outer race 11, and knurling by rolling is applied to the radially outer surface of the annular protrusion 20 formed between the pair of annular grooves 19, when teeth of a knurling tool are pushed into the annular protrusion 20 during the knurling, the annular protrusion 20 is plastically deformed such that it is partially moved into the pair of annular grooves 19, and a load applied to the annular protrusion 20 during knurling is also partially axially applied to and absorbed by the pair of annular grooves 19.

Since the annular protrusion 20 has a trapezoidal sectional shape such that its axial width is smallest at the radially outer surface and gradually and radially inwardly increases, when the teeth of the knurling tool are pushed into the annular protrusion 20, the contact area between the teeth of the knurling tool and the annular protrusion 20 gradually increases, thus preventing a sudden increase in load applied to the protrusion 20. This makes it easier to provide straight knurling by rolling on the annular protrusion 20.

Since the diameter B of the circle that contacts, from radially inwardly, the bottoms of the groove-shaped recesses 21, which are formed by knurling, is larger than the diameter A of the circular bottom of each annular groove 19, , the load applied to the annular protrusion 20 when the annular protrusion 20 is plastically deformed is effectively absorbed by the pair of annular grooves 19. Thus, a radial load applied to the outer race 11 is very small, and thus, straight knurling can be formed without deforming the outer race 11. Accordingly, deep groove-shaped recesses 21 can be formed, and by the engagement between the protrusions 36 formed in the recesses 21 and the projections 22 by the straight knurling, it is possible to reliably prevent creep between the outer race 11 and the pulley body 30.

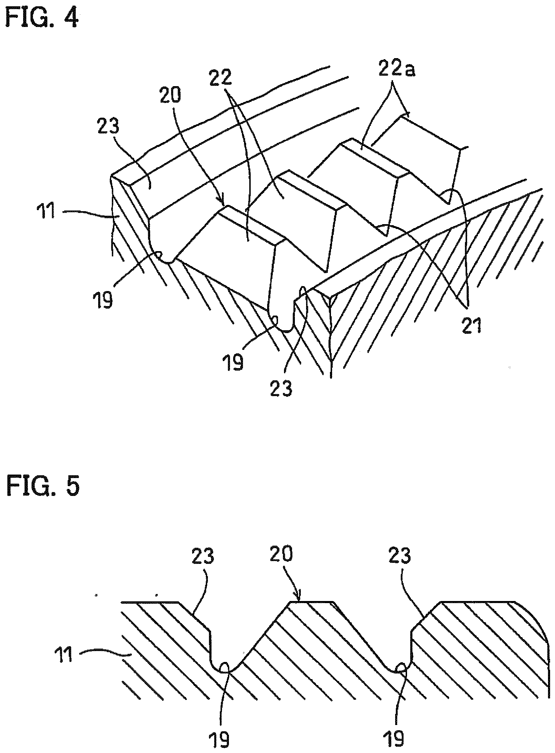

In Fig. 2, the sectional shape of the annular protrusion 20 formed between the pair of annular grooves 19 taken along a plane including the center axis of the rolling bearing 10 is a trapezoid, but is not limited to a trapezoid. Fig. 5 to Fig. 7 illustrate other examples of sectional shapes of the annular protrusion 20 before the knurling is applied to the annular protrusion 20.

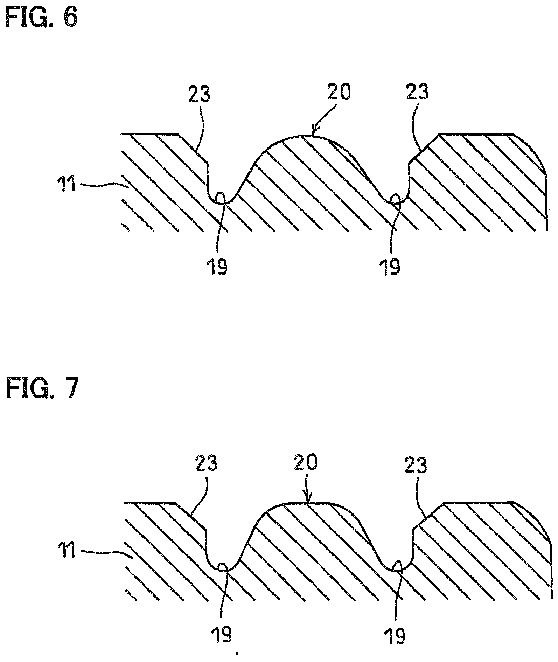

In Fig. 5, the sectional shape of the annular protrusion 20 is an inverted V shape having a flat portion at the top. In Fig. 6, the sectional shape of the annular protrusion 20 is a circular arc. In Fig. 7, the sectional shape of the annular protrusion 20 is a combination of a trapezoid and a circular arc.

Since any of the annular protrusions 20 illustrated in Fig. 5 to Fig. 7 is shaped such that its axial width is smallest at its radially outer surface, and gradually and radially inwardly increases, when the teeth of the knurling tool are pushed into the annular protrusion 20, the contact area between the teeth of the knurling tool and the annular protrusion 20 gradually increases, thus preventing a sudden increase in load applied to the protrusion 20. This makes it easier to provide straight knurling by rolling on the annular protrusion 20.

### DESCRIPTION OF THE NUMERALS

- 10: Rolling bearing
- 11: Outer race
- 19: Annular groove
- 20: Annular protrusion
- 21: Recess
- 22: Projection
- 30: Pulley body
- 36: Protrusion

## Claims

1. A resin pulley comprising:
a rolling bearing (10) including an outer race (11); and
a pulley body (30) that is integrally resin-molded on a radially outer surface of the outer race (11) of the rolling bearing (10);
**characterized in that**:
the outer race (11) has, on the radially outer surface of the outer race (11), a pair of annular grooves (19) axially spaced apart from each other and each having a circular bottom, and an annular protrusion (20) between the pair of annular grooves (19);
the annular protrusion (20) has, on a radially outer surface of the annular protrusion (20), straight knurling formed by rolling, the straight knurling comprising groove-shaped recesses (21) and projections (22) disposed circumferentially alternating with the groove-shaped recesses (21), each of the groove-shaped recesses (21) and the projections (22) having two ends that extend to the respective pair of annular grooves (19);
a diameter of a circle that contacts, from radially inwardly, bottoms of the groove-shaped recesses (21) is larger than a diameter of the circular bottom of each of the pair of annular grooves (19); and
the pulley body (30) includes protrusions (36) formed by solidification of a molten resin filling the groove-shaped recesses (21).

2. The resin pulley according to claim 1, wherein an axial sectional shape of the annular protrusion (20) is a trapezoid, a circular arc, and a combination of a trapezoid and a circular arc.

3. The resin pulley according to claim 1 or 2, wherein the groove-shaped recesses (21) have depths of 0.3mm or over.
